(19) Europäisches Patentamt
European Patent Office
Office européen des brevets

(11) **EP 4 562 589 B1**

(12) **EUROPEAN PATENT SPECIFICATION**

(45) Date of publication and mention
of the grant of the patent:
**20.05.2026  Bulletin 2026/21**

(21) Application number: **22813599.2**

(22) Date of filing: **09.11.2022**

(51) International Patent Classification (IPC):
**G06T 5/60** (2024.01)

(52) Cooperative Patent Classification (CPC):
**G06T 5/60;** G06T 2207/20081; G06T 2207/20084

(86) International application number:
**PCT/EP2022/081196**

(87) International publication number:
**WO 2024/099545 (16.05.2024 Gazette 2024/20)**

(54) **VIEW DEPENDENT TEXTURE ENHANCEMENT**

SICHTABHÄNGIGE TEXTURVERBESSERUNG

AMÉLIORATION DE TEXTURE DÉPENDANT DE LA VUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**04.06.2025  Bulletin 2025/23**

(73) Proprietor: **Huawei Technologies Co., Ltd.**
**Shenzhen, Guangdong 518129 (CN)**

(72) Inventors:
• **PEREZ PELLITERO, Eduardo**
**80992 Munich (DE)**
• **SHAW, Richard**
**80992 Munich (DE)**
• **LEONARDIS, Ales**
**80992 Munich (DE)**
• **SLABAUGH, Gregory**
**80992 Munich (DE)**
• **CATLEY-CHANDAR, Sibi**
**80992 Munich (DE)**

(74) Representative: **Thun, Clemens**
**Mitscherlich PartmbB**
**Karlstraße 7**
**80333 München (DE)**

(56) References cited:
• **RONG XUEJIAN ET AL: "Boosting View
Synthesis with Residual Transfer", 2022 IEEE/
CVF CONFERENCE ON COMPUTER VISION AND
PATTERN RECOGNITION (CVPR), IEEE, 18 June
2022 (2022-06-18), pages 19728 - 19737,
XP034193346, DOI: 10.1109/
CVPR52688.2022.01914**
• **MILDENHALL BEN ET AL: "NeRF",
COMMUNICATIONS OF THE ACM, ASSOCIATION
FOR COMPUTING MACHINERY, INC, UNITED
STATES, vol. 65, no. 1, 17 December 2021
(2021-12-17), pages 99 - 106, XP058891216, ISSN:
0001-0782, DOI: 10.1145/3503250**
• **MATTHEW TANCIK ET AL: "Fourier Features Let
Networks Learn High Frequency Functions in
Low Dimensional Domains", ARXIV.ORG,
CORNELL UNIVERSITY LIBRARY, 201 OLIN
LIBRARY CORNELL UNIVERSITY ITHACA, NY
14853, 18 June 2020 (2020-06-18), XP081698769**

**Description**

FIELD OF THE INVENTION

This disclosure relates to the processing of images, in particular to texture enhancement during image processing.

BACKGROUND

Recent advances in multiview three-dimensional (3D) reconstruction and rendering using Neural Radiance Fields (NeRF), as described in B. Mildenhall et al., "NeRF: Representing Scenes as Neural Radiance Fields for View Synthesis", The 2020 European Conference on Computer Vision (ECCV 2020), aim to synthesize high-quality, photorealistic novel views of complex 3D scenes by using a set of images with known camera poses. In this approach, neural implicit functions learn the mapping from continuous five-dimensional (5D) coordinates, i.e. 3D spatial location $(x, y, z)$ and a two-dimensional (2D) viewing direction $(\theta, \varphi)$, where $\theta$ and $\varphi$ are angles in the horizontal and vertical planes respectively which define the direction in space from which the 3D spatial location is viewed (or alternatively, the direction in which the ray radiance is emitted), to emitted view-dependant colour radiance (RGB) and density. By querying 5D coordinates along camera rays and the use of classical volumetric rendering techniques, rendered images can be obtained that are directly comparable to the real input images from the scene, which can therefore be used as training supervision to learn the neural implicit functions.

Despite their ability to reconstruct novel views of complex scenes, one of the open challenges of differentiable rendering methods remains to capture, reconstruct and render high-frequency information that is present in the training images. In practice, this means that neural rendering approaches behave similarly to a low-pass filter renderer (i.e. high-frequencies are lost and blurred out instead). Therefore, images output from such techniques can lack high-frequency details. This is particularly problematic, as high-frequency information is fundamental for photorealistic, high-quality renderings, such as fine textures, hair and cloth patterns.

Several approaches have been proposed in order to tackle the lack of high-frequency details in neural rendering-based methods.

The most straightforward approach in order to enhance the renderings output from a neural rendering pipeline is to incorporate a 2D image-to-image translation method (for example, a Convolutional Neural Network (CNN)) that operates on the rendered image and is trained with paired data of degraded renderings and real captured images. An example of such approach is described in US2022014723A1.

Such approaches are however limited in the fact that all the processing relies on 2D information alone, and thus cannot operate on or reconstruct view-dependent (i.e. 3D-related) features or enforce 3D consistency between different views. Additionally, such methods can suffer from data scarcity, as it is the case that neural rendering training datasets are generally of limited size and ultimately CNN networks require a large amount of training data in order to achieve high-quality results.

The approach described in X. Rong et al., "Boosting View Synthesis with Residual Transfer", The 2022 European Conference on Computer Vision (ECCV 2022), also aims to improve the texture and high-frequency novel-view rendering performance of neural rendering methods. In this approach, colour residuals (i.e. difference between the input training images and the rendering corresponding to the same camera pose) are transferred from training views to novel views. This approach blends the residuals from multiple views using a heuristic weighting mechanism that depends on ray visibility and angular differences. This method also has some limitations. It relies on having a very accurate estimate of the scene geometry and can introduce ghosting artefacts if not accurate. It also relies on training views that are close enough and that share the same scene visibility with the novel view. The demonstrated improvement can be limited, and for some scenes it may be negligible.

It is desirable to develop an approach that overcomes at least some of the above issues.

SUMMARY OF THE INVENTION

The above mentioned problem is solved by the subject matter of the independent claims. Further implementation forms are provided in the dependent claims.

According to one aspect, there is provided an image processing apparatus for forming an enhanced image, the image processing apparatus being configured to: receive input data comprising an input image, a corresponding depth map for the input image and a three-dimensional camera pose for the input image, wherein the input image and the corresponding depth map are outputs of an image rendering pipeline; map the input data to an embedding space to determine a data point for the input data in the embedding space; determine a respective distance between the data point for the input data and each of multiple centroids in the embedding space, the multiple centroids each corresponding to a respective trained model; in dependence on each respective distance, select multiple trained models; apply each model of the determined multiple trained models to the input image to form multiple hypotheses of the enhanced image; and in dependence on the multiple hypotheses of the enhanced image, form the enhanced image.

The construction of an embedding space which can use both 2D image information and 3D geometric information for the input data allows the most relevant neighboring training images to the input image to be found, even if these neighbors are not geometrically nearby. Hence the present method does not rely on having training views which share the same scene visibility with the input image. This may allow to provide significantly improved reconstruction of texture and high frequency details in synthesized novel views output from a rendering pipeline. The generation of multiple hypotheses (enhanced images) before the subsequent fusion into a single enhanced image can result in a more robust method which can discard information which would negatively affect image quality and promote good information which can improve image quality.

The input image may correspond to a novel view output from the image rendering pipeline. The input image may be the output of a rendering model. The image rendering pipeline may comprise a neural radiance field. The image rendering pipeline may be part of a neural rendering framework. This may allow for texture enhancement of images corresponding to novel views or other rendered images.

The input data may comprise two-dimensional RGB image information and three-dimensional geometric information. The image processing apparatus may be configured to map the input data to the embedding space to form the data point. The image processing apparatus may be configured to map the two-dimensional RGB image information and three-dimensional geometric information to the embedding space to form the data point. The image processing apparatus may be configured to extract features from the input data and to map the features to the embedding space to form the data point. The two-dimensional RGB image information may comprise information (for example, features) extracted from the input image. The three-dimensional geometric information may comprise information (for example, features) extracted from the depth map for the input image, and/or camera calibration matrices, etc.

The distance may be a Euclidean distance, i.e. the length of a line segment between the data point and a respective centroid. This may be a suitable implementation for determining the nearest neighbors to the data point corresponding to the input data in the embedding space.

Each centroid may be pre-computed from a respective set of training data. The training data may also be used to train the image rendering pipeline. Each set of training data may comprise a respective training image (for example, a rendered training image, such as a rendered output from the image rendering pipeline), a corresponding depth map for that training image and a three-dimensional camera pose for that training image. This can allow the apparatus to identify the most relevant training image to the input image.

Each set of training data may comprise two-dimensional RGB image information and three-dimensional geometric information. The image processing apparatus may be configured to map a respective set of data to the embedding space to form a respective centroid. There may therefore be as many centroids as there are sets of training data (i.e. a respective centroid for each set of training data). The image processing apparatus may be configured to map the two-dimensional RGB image information and three-dimensional geometric information for the respective set of training data to the embedding space to form the respective centroid. The image processing apparatus may be configured to extract features from the training data and to map the features to the embedding space to form the centroid. The three-dimensional geometric information may comprise information extracted from the depth map for the training image, and/or camera calibration matrices, etc.

The multiple centroids may be pre-computed by mapping each set of training data to the embedding space. The mapping may be the same mapping used to map the input data to the embedding space to form the data point during inference. This may allow the data point to be compared to the centroids in the embedding space to identify the most relevant centroids.

Each respective centroid may have a corresponding trained model. Each model of the multiple trained models may be pre-trained to learn residuals of a corresponding training image used to train the image rendering pipeline. That training image may correspond to the respective centroid. Therefore, each training image used to train the image rendering pipeline may have a corresponding centroid and a corresponding trained model. Each trained model may be trained using a single training image. Training on a single training image per model may allow to retain the advantages of a CNN (i.e. translation invariance), while still also learning view dependent textures, unlike generic naive 2D texture enhancement networks.

The multiple trained models may comprise multiple independent convolutional neural networks. Each trained model may have the same architecture but different weights. Each of the trained model may be a texture enhancement model. This may allow a different texture enhancement model to be applied to the same input image to form multiple hypothesis enhanced images.

Each trained model may be a convolutional neural network. Each convolutional neural network may be a U-Net comprising a set of convolutions of decreasing spatial resolution followed by a set of convolutions of increasing spatial resolution, with residual connections between convolutions of the same resolution. This may be a convenient implementation. The use of translation invariant convolutional neural networks means the present approach can perform residual transfer to nearby views without relying on having a very accurate estimate of scene geometry, and without introducing ghosting artefacts.

The enhanced image and the multiple hypotheses of the enhanced image may each be texture-enhanced images relative to the input image. The image processing apparatus may therefore be configured to perform texture enhancement of an image output from an image rendering pipeline.

Each centroid may correspond to a different three-dimensional camera pose. The three-dimensional camera pose may specify values of the 3D location of the camera center and the camera viewing angle (which may be termed the position and the orientation respectively) for each training image corresponding to a centroid. Each training image may correspond to a different three-dimensional camera pose. Each trained model may correspond to a different three-dimensional camera pose. This may allow the image processing apparatus to select centroids and their corresponding trained models that are nearest neighbors to the input image in terms of 3D spatial information.

The image processing apparatus may be configured to fuse the multiple hypotheses of the enhanced image to form the enhanced image. Fusion of the multiple hypotheses of the enhanced image may be performed by inputting the multiple hypotheses of the enhanced image to a neural network, wherein the output of the neural network is the enhanced image. This may allow information from each of the hypothesis enhanced image to be combined to form an overall enhanced image.

According to a second aspect there is provided a method for forming an enhanced image, the method comprising: receiving input data comprising an input image, a corresponding depth map for the input image and a three-dimensional camera pose for the input image, wherein the input image and the corresponding depth map are outputs of an image rendering pipeline; mapping the input data to an embedding space to determine a data point for the input data in the embedding space; determining a respective distance between the data point for the input data and each of multiple centroids in the embedding space, the multiple centroids each corresponding to a respective trained model; in dependence on each respective distance, selecting multiple trained models; applying each model of the determined multiple trained models to the input image to form multiple hypotheses of the enhanced image; and in dependence on the multiple hypotheses of the enhanced image, forming the enhanced image. This may allow to provide significantly improved reconstruction of texture and high frequency details in synthesized novel views output from a rendering pipeline.

According to a further aspect, there is provided a computer-readable storage medium having stored thereon computer-readable instructions that, when executed at a computer system, cause the computer system to perform the steps set out above. The computer system may comprise the one or more processors. The computer-readable storage medium may be a non-transitory computer-readable storage medium.

BRIEF DESCRIPTION OF THE FIGURES

The present disclosure will now be described by way of example with reference to the accompanying drawings. In the drawings:

Figure 1 schematically illustrates an example of an image processing architecture for forming an enhanced image.

Figure 2 shows an exemplary U-Net architecture of a model corresponding to a single training image of a centroid.

Figure 3 schematically illustrates an exemplary architecture of a model dictionary comprising N U-Nets, one for each centroid.

Figure 4 shows an exemplary architecture of a hypotheses fusion network.

Figure 5 schematically illustrates a training strategy for the dictionary of models and the dictionary of centroids.

Figure 6 shows an example of a method for forming an enhanced image in accordance with embodiments of the present invention.

Figure 7 shows an example of an image processing apparatus in accordance with embodiments of the present invention and some of its associated components.

Figures 8A and 9A illustrate qualitative results produced using the state-of-the-art neural rendering method, NeRFies (as described in Park et al., "NeRFies: Deformable Neural Radiance Fields", arXiv:2011.12948v5, September 2021), compared to the present approach in Figures 8B and 9B.

DETAILED DESCRIPTION OF THE INVENTION

Described herein is an image processing module that can enable differentiable rendering approaches to reconstruct and render high-frequency details, which can lead to photorealistic, view-dependant renderings.

The view-dependent texture enhancement pipeline described below can leverage both 2D image information and 3D geometric information in image data to map training views and novel views output by a differentiable rendering pipeline to a specialized embedding space, where it is possible to identify the most relevant nearest neighbor training views to a particular input image, in terms of both geometric proximity and textural similarity.

As will be described in more detail below, the K nearest neighbor rendered training images to the input image are identified (where K>1), and K corresponding trained models are selected, for example from a dictionary of pre-trained models, where each model is trained to learn the residuals of a single rendered training image relative to its corresponding ground truth image captured by a camera. The application of each model to the input image independently generates one enhanced output. These form hypotheses images that can be fused together into one enhanced output image.

The system can be used enhance the textures of views rendered by a differentiable rendering pipelines, such as Neural Radiance Fields (NeRF).

The view dependent texture enhancement pipeline is described in further detail below, including the overall architecture, individual network architectures, input and output modalities and loss functions.

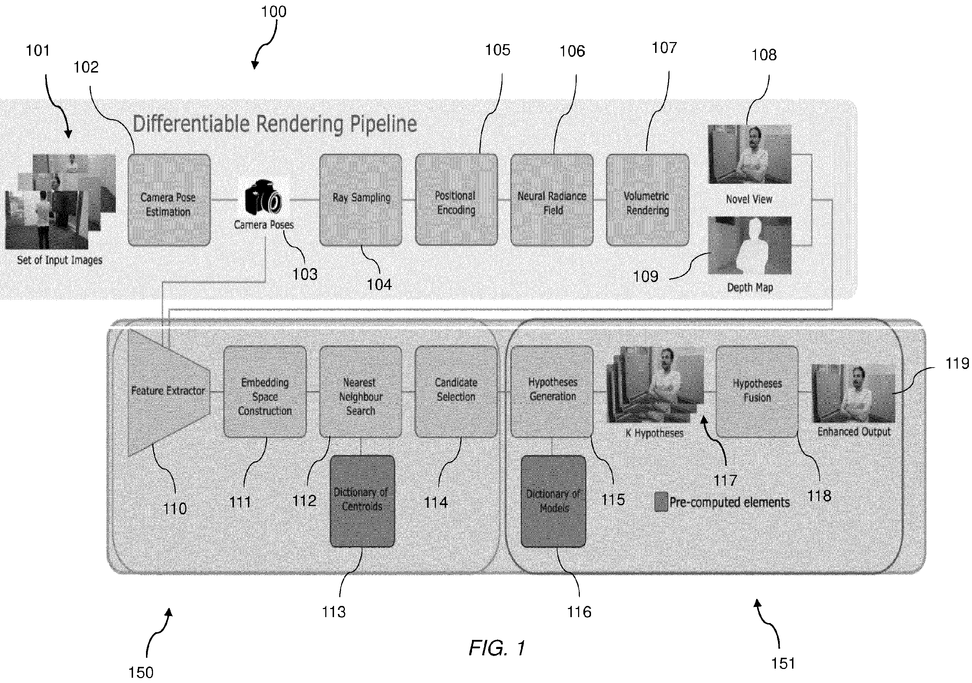

In the example shown in Figure 1, the input data is the output of a differentiable rendering pipeline 100. In this example, the rendering pipeline is a pipeline configured to output novel views of 3D scenes, such as, but not limited to, a NeRF pipeline. The differentiable rendering pipeline may comprise a trained rendering model. The rendering model may be trained using sets of training data comprising a ground truth image 101 captured by a camera and the corresponding known, or estimated, 3D camera pose. However, the rendering pipeline may be any suitable pipeline or model configured to output a rendered image and a corresponding depth map for the image.

Such rendering pipelines may include modules that perform operations such as ray sampling, as shown at 104, positional encoding, as shown at 105, neural radiance field, as shown at 106, and volumetric rendering, as shown at 107.

In this example, during training of the differentiable rendering pipeline 100, the pipeline 100 receives a set of images 101. These images 101 are training images for the pipeline 100. The training images 101 may be ground truth images captured by a camera. For each image 101 input to the pipeline 100, the pose of the camera that captured the image is estimated at 102, or the pose may be known and input to the pipeline. The camera pose may comprise a 3D camera position and an orientation/viewing angle. The poses 103 of each input image 101 to the differentiable rendering pipeline can be extracted and used for mapping the rendered training data (comprising a rendered training image and a corresponding depth map for the image) output from the differentiable rendering pipeline 100 in the training phase to an embedding space to form multiple centroids, one for each training image, as will be described in more detail below.

Once trained, the output of the rendering pipeline is a rendered image 108 and a depth map for the image 109. In this example, where the pipeline 100 implements a neural radiance field module 106, the output of the pipeline is an image 108 comprising a novel view and a depth map 109 corresponding to the novel view.

The system described herein utilizes a neighbor embedding mechanism and a hypotheses generation mechanism. In Figure 1, the neighbor embedding mechanism is indicated generally at 150 and the hypotheses generation mechanism is indicated generally at 151. Taking the output 108, 109 of the differentiable rendering pipeline 100 as an input, the neighbor embedding mechanism 150 constructs a specialized embedding space that the rendered image output from the rendering pipeline is mapped to in order to find the input image's nearest neighbors, for example from the rendered training data used to train the differentiable rendering pipeline 100, by using both 2D and 3D geometric information.

In this example, the image 108, its corresponding depth map 109 and its corresponding three-dimensional camera pose 103 are input to a feature extractor 110. The feature extractor can extract features from the input image and the depth map for the input image using respective convolution functions. The mapping function can be implemented as a weighted sum of one or more of the camera position (from the pose), camera angle (from the pose), features extracted from the RGB input by means of a convolution and features extracted from the depth map by means of a convolution. The mapping function from the input data to the embedding space can be fixed or learnable. By mapping the input data to the embedding space, a data point in the embedding space is determined which corresponds to the input data. The data point for the input data may be a centroid for the input data.

Once the input data has been mapped to the embedding space to form the data point, a distance between the data point for the input data and each of multiple other centroids in the embedding space is determined. Each of these other centroids can be predetermined from a set of training data. Each set of training data comprises a rendered training image output from the pipeline 100 and its corresponding depth map, and a corresponding 3D camera pose for the rendered training image. The rendered training images may be images output by the pipeline 100 during training of the pipeline 100. Each centroid is formed by mapping a set of training data to the embedding space using the same mapping as is used during the inference phase for the input data. The information for the centroids can be stored in a dictionary of centroids 113. When performing the nearest neighbor search, shown at 112, the system can determine the distance between the data point and each centroid in the dictionary of centroids in the embedding space.

The distance function which calculates the distances to the nearest neighbors can be fixed or learnable. The distance function can be implemented as the Euclidean distance between points in the embedding space (i.e. between the data point for the input data and each of the centroids).

The neighbor embedding mechanism therefore takes as input the RGB image rendered by the differentiable rending pipeline, as well as the image's corresponding camera pose and depth map and maps these inputs to a specialized embedding space to form the data point for the input image. Within this embedding space, the mechanism then finds the nearest neighbors to the input image by calculating distances between the input and each of the centroids, which may be stored in the dictionary of centroids. The dictionary of centroids can be pre-computed by applying the same mapping function described above to the set of rendered training images which are used to train the differentiable rending pipeline and their corresponding depth maps and poses.

The mapping of the input image, and its corresponding camera pose and depth map, to a specialized embedding space makes it easier to find the most relevant neighboring centroids from a pre-computed dictionary of centroids storing centroids for each rendered training image used to train the image rendering pipeline.

Based on each respective distance of the data point from each respective centroid in the embedding space, the K most relevant centroids (for example, those having the shortest distance from the data point for the input data) of the N total centroids are then chosen as candidates and passed to the hypotheses generation mechanism. Therefore, the apparatus can be configured to determine a respective distance between the data point for the input data and each of the total number of centroids in the embedding space (one centroid per set of training data). Based on these distances, K centroids of the total number of centroids N are selected. As will be described in more detail below, each centroid corresponds to a respective trained model. As each centroid has an associated trained model, this step selects multiple trained models.

The hypotheses generation mechanism 151 takes as input the K candidate centroids, and their corresponding trained models, selected by the neighbor embedding mechanism and also the RGB image rendered by the differentiable rending pipeline, and outputs a single texture-enhanced output.

For each of the K candidate centroids selected, the corresponding model is applied to the image 108. Models corresponding to each centroid in the dictionary of centroids can be stored in a dictionary of models 116.

In one implementation, the model dictionary is composed of a number of independent trained models, where the trained models are identical convolutional neural networks (CNNs). Each CNN may be a U-Net, which is composed of a set of convolutions of decreasing spatial resolution followed by a set of convolutions of increasing spatial resolution, with residual connections between convolutions of the same resolution.

Each trained model is a texture enhancement model. The input RGB image 108 is processed independently by each of the selected K models, which each generate a single texture enhancement hypothesis enhanced RGB image. Finally, the K generated hypotheses are fused together into a single output with a fusion network.

Therefore, for each neighbor (centroid) selected, the hypotheses generation mechanism shown at 151 generates a hypothesis image for enhancing the textures of the rendered image 108 by applying a trained model corresponding to a respective one of the selected centroids to the image 108. Once the models have been selected, for example from the dictionary of models 116, the hypotheses generation step shown at 115 applies each of the selected models individually to a copy of the input image 108 to output multiple hypothesis images 117. If K most relevant centroids are selected, the hypotheses generation mechanism applies each of the K models corresponding to each of the K selected centroids to the input image to form K hypothesis images 117.

The hypotheses generation mechanism 151 therefore generates one hypothesis per selected centroid and its corresponding trained model. Each hypothesis image is an enhanced RGB image which has been processed by one of the trained models. The input image 108 is therefore processed independently with each of the K models.

As shown at 118, the hypotheses generation mechanism then fuses each hypothesis image together with the other hypothesis images into one enhanced output 119. The hypothesis fusion shown at 118 may be performed by inputting the hypotheses images into a neutral network or other suitable model to form the enhanced output image 119 as the output. The K generated hypotheses are therefore fused together with a fusion network to form a single enhanced output.

To summarise, in the preferred implementation, the input and output modalities are as follows:

INPUT

1. An RGB image rendered by a differentiable rendering pipeline
2. A depth map of (1) rendered by a differentiable rendering pipeline
3. A camera pose for (1)

OUTPUT

1. An enhanced RGB image

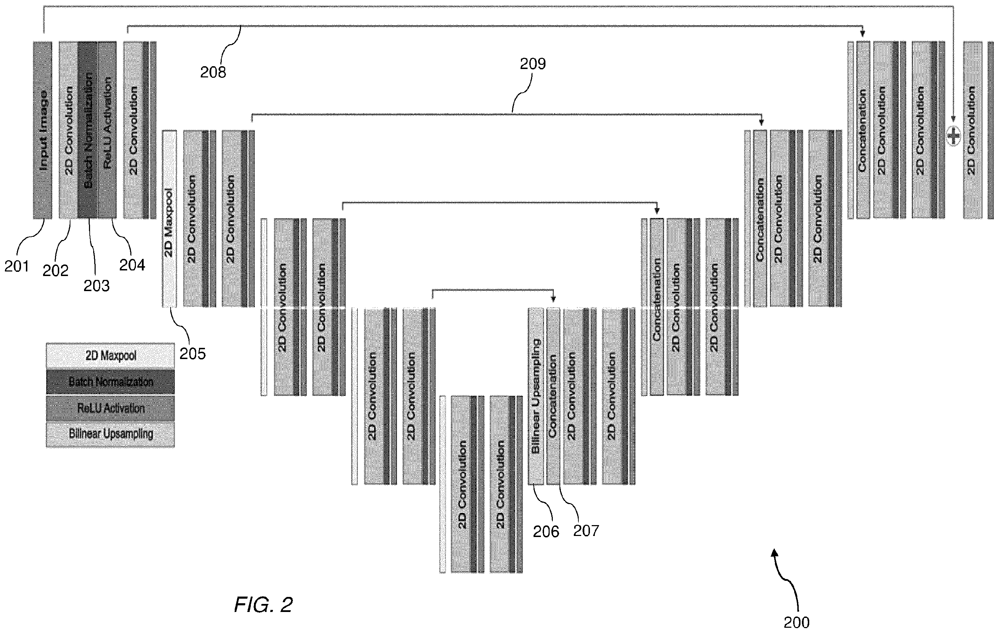

Figure 2 shows an example of a trained model that can be applied to the input image in the hypotheses generation step at 115 in Figure 1 to form a hypothesis image. The model is a texture enhancement model. The model may comprise a neural network 200. In this example, the model has a U-Net architecture. In other implementations, the model may have a different architecture.

The trained model 200 receives the input image 201 (for example, the novel view 108 output from the differentiable rendering pipeline 100). The network of the model comprises a contracting path and an expansive path. The contracting path comprises the repeated application of convolutions, such as that shown at 202, followed by a batch normalization 203, Rectified Linear Unit (ReLU) 204 and a maxpooling operation 205. During the contraction, the spatial information is reduced while feature information is increased. The expansive path combines the feature and spatial information through a sequence of up-convolutions with bilinear upsampling 206 and concatenations 207 with high-resolution features from the contracting path.

In this example, the U-Net comprises a set of convolutions of decreasing spatial resolution followed by a set of convolutions of increasing spatial resolution, with residual connections, such as those shown at 208 and 209, between convolutions of the same resolution.

As discussed above, each centroid corresponds to a respective trained model. The trained models can be collectively stored in a model dictionary, which may be an area of memory of the image processing apparatus for storing the multiple trained models.

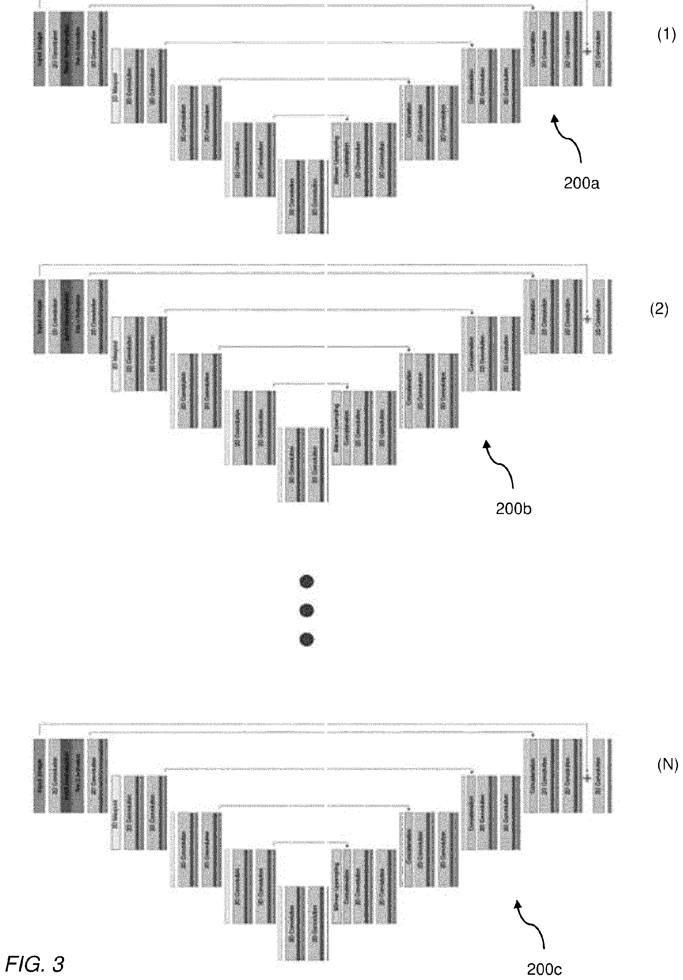

An exemplary overall architecture of the model dictionary 116 is illustrated in Figure 3. As discussed above, one model can be trained for each centroid. If there are N centroids in the dictionary of centroids, the dictionary of models may contain N trained models. Each trained model corresponds to a centroid. Therefore, each model corresponds to a rendered training image. Each model in the dictionary is trained to learn the error residuals of a single rendered training image from the set of rendered training images output from the image rending pipeline. Each model is trained by taking as input a rendered image 108 and predicting the image residuals which, when added to the rendered image 108, minimize the difference to the corresponding ground truth image 101. The model is trained using a L1 loss function via gradient descent and backpropagation, as is commonly used for deep learning models.

In this example, the model dictionary comprises multiple U-Nets of the type 200, one for each centroid. The models corresponding to the 1$^{st}$, 2$^{nd}$ and N$^{th}$ centroids are shown at 200a, 200b and 200c respectively.

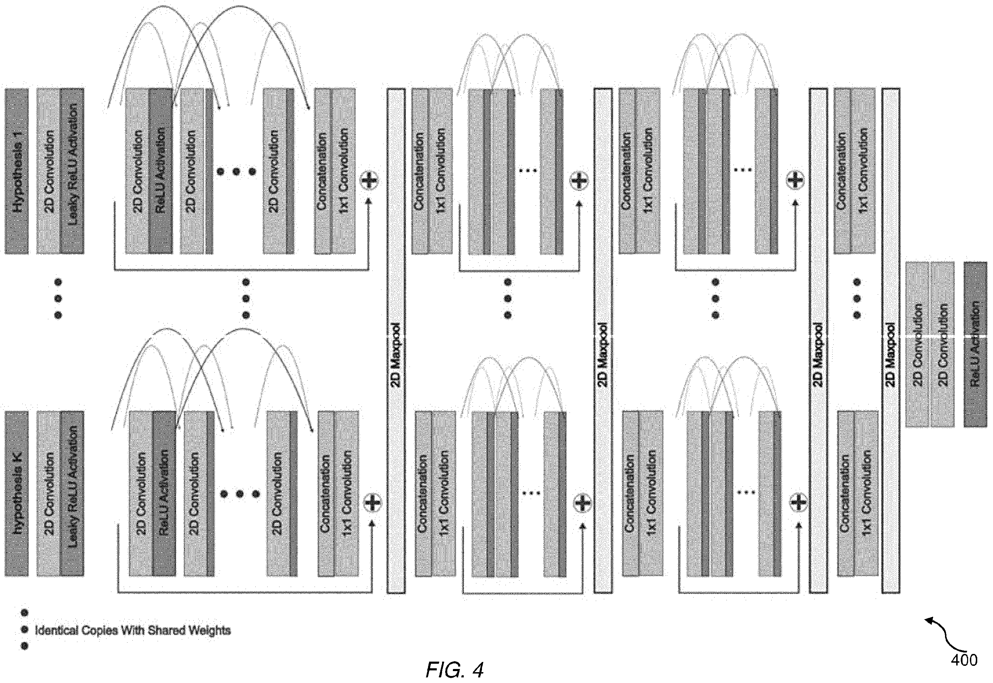

Figure 4 shows an exemplary architecture of the hypotheses fusion mechanism. In this example, the fusion is performed by inputting the multiple hypothesis enhanced images into a neural network 400, such as a CNN. This fusion network comprises a set of convolutions with dense residual connections and maxpooling operations which are applied across multiple instances of the network with shared weights to fuse the K hypotheses images into a single enhanced output image. In this example, the neural network comprises 2D maxpooling layers, 2D convolutions and a ReLU activation layer. However, the fusion network may have any suitable architecture.

As discussed above, during training, multiple sets of training data used to train the differential rendering pipeline are mapped to the embedding space to form a centroid for each set of training data. A texture enhancement model is also trained for each training image. The centroids and the trained models can be stored in a dictionary of centroids and a dictionary of models, respectively.

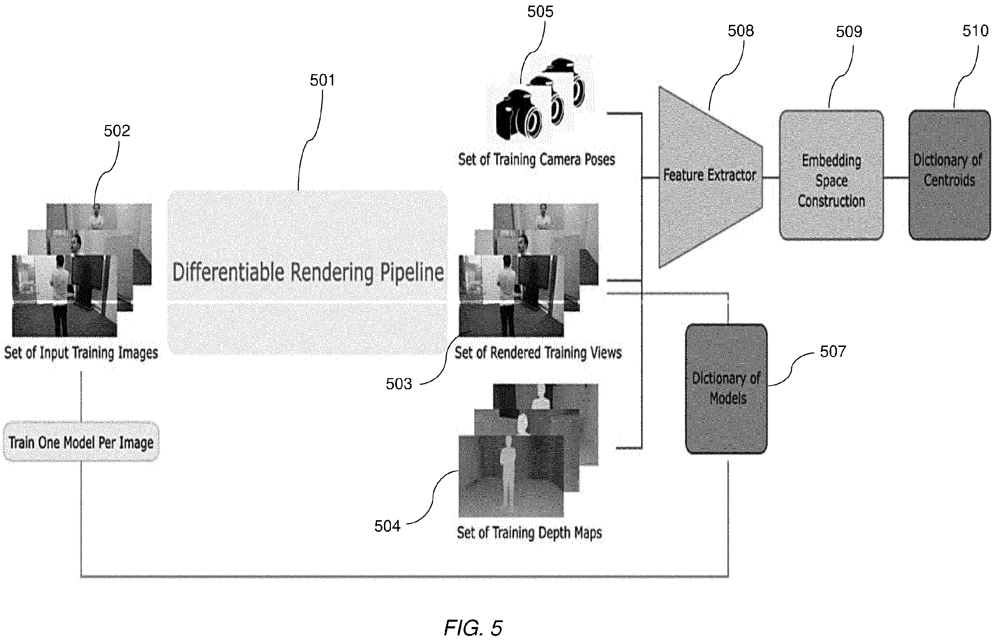

An example of the mechanism for forming the centroids in the dictionary of centroids and the trained models in the dictionary of models is schematically illustrated in Figure 5. The dictionary of centroids and dictionary of models are one convenient implementation for storing the centroids and the trained models, but the centroids and trained models formed as described below could be stored at the image processing apparatus, or at another remote device or server, using any suitable approach.

The centroids and the trained models can be formed during the training stage of the differentiable rendering pipeline 501.

The trained models can be formed using training data comprising multiple sets of training image pairs. Each training image pair comprises a training image 503 rendered by the differentiable rendering pipeline 501 and a corresponding image 502 obtained by a real camera as ground truth. The pose 505 for each training image pair is known, or estimated. Each training image 503 rendered by the differentiable rendering pipeline also has a corresponding depth map 504 that is output from the differentiable rendering pipeline 501 and is used to form the centroid corresponding to the image 503, along with the corresponding 3D camera pose 505.

The differentiable rendering pipeline 501 itself is a trained image rendering pipeline that is trained using the ground truth images 502 captured by a camera, and their corresponding known or estimated camera poses 505.

The model dictionary 507 comprises N trained models, one corresponding to each centroid. In the preferred implementation, these are N convolutional neural networks, such as U-Nets. Each trained model has learned weights. The trained models can be stored on any device, for example the device where inference is being performed, or on an additional storage device or server.

As described above, each model is trained by taking as input a rendered image 503 and predicting the image residuals which, when added to the rendered image 503 minimize the difference to the corresponding ground truth image 502. The model is trained using a L1 loss function (via gradient descent and backpropagation as with most deep learning models).

Each centroid is pre-computed from a respective set of training data comprising a rendered training image 503 output from the differentiable rendering pipeline 501, a corresponding depth **map 504 for** that training image and a three-dimensional camera pose 505 (estimated or known) for that training image 503.

The multiple centroids are each determined by mapping a respective set of training data to an embedding space to determine a centroid for the respective set of training data in the embedding space. A feature extractor 508 extracts 2D and 3D features from the training data. The centroid for the training data is then formed by mapping the training data to be embedding space at 509. Once all of the centroids are formed for all of the sets of training data, the centroids can be stored in a dictionary of centroids 510 and used in the inference phase to find the nearest neighbors to the input data, as described above.

The mapping used to map the sets of training data in the embedding space is preferably the same mapping as is used in the inference phase for the mapping of the input data in the embedding space to form the data point for the input data.

As mentioned above, to train the models in the model dictionary and/or to train the fusion neural network, the pixelwise reconstruction loss (L1 loss) between the predicted enhanced image, $\hat{E}$ and the ground truth training image $E$ which is used to train the differentiable rendering pipeline is minimized.

The loss function can be given as:

$$L = \left| \hat{E} - E \right|_1$$

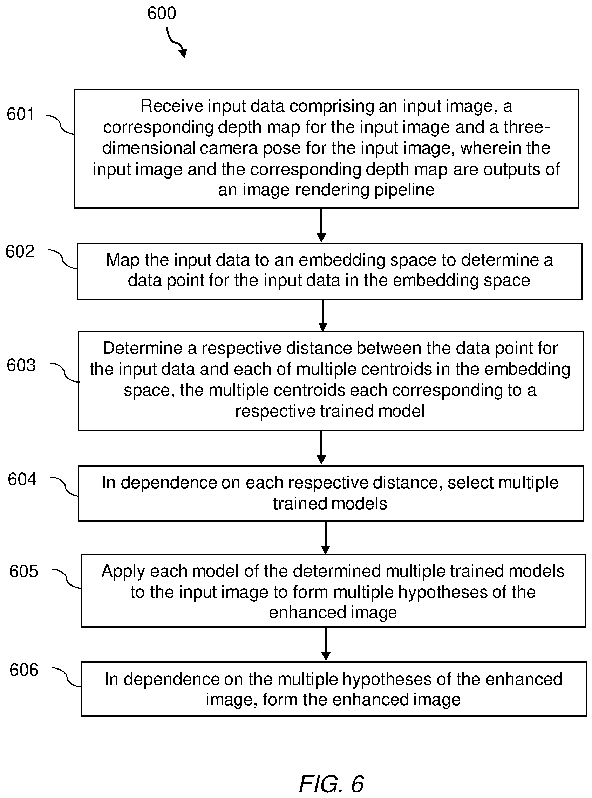

Figure 6 shows an example of a method for forming an enhanced image. At step 601, the method comprises receiving input data comprising an input image, a corresponding depth map for the input image and a three-dimensional camera pose for the input image, wherein the input image and the corresponding depth map are outputs of an image rendering pipeline. At step 602, the method comprises mapping the input data to an embedding space to determine a data point for the input data in the embedding space. At step 603, the method comprises determining a respective distance between the data point for the input data and each of multiple centroids in the embedding space, the multiple centroids each corresponding to a respective trained model. At step 604, the method comprises, in dependence on each respective distance, selecting multiple trained models. At step 605, the method comprises applying each model of the determined multiple trained models to the input image to form multiple hypotheses of the enhanced image. At step 606, the method comprises, in dependence on the multiple hypotheses of the enhanced image, forming the enhanced image.

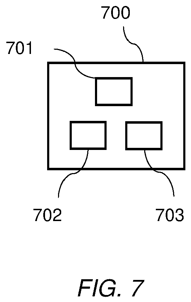

Figure 7 shows an example of an image processing apparatus for performing the methods described herein. The apparatus 700 may comprise at least one processor, such as processors 701, and at least one memory, such as memory 702. The memory stores in a non-transient way code that is executable by the processor(s) to implement the device in the manner described herein. The apparatus may also comprise one of more image sensors 703 configured to capture an image which can then be input to a rendering pipeline implemented by the processor 701 or used to train the rendering pipeline in the manner described herein.

Embodiments of the present invention offer a number of advantages compared to existing methods.

The use of translation invariant convolutional neural networks means the present approach can perform residual transfer to nearby views without relying on having a very accurate estimate of scene geometry, and without introducing ghosting artefacts.

The construction of a specialized embedding space which uses both 2D image information and 3D geometric information for its mapping of the input data allows to find the most relevant neighbors, even if neighbors are not geometrically nearby. Hence the present method does not rely entirely on having training views which share the same scene visibility with the novel view. This provides significantly improved reconstruction of texture and high frequency details in synthesized novel views.

The generation of multiple hypotheses (enhanced images) before the subsequent fusion into a single enhanced image results in a more robust method which can discard bad information which would negatively affect image quality and promote good information which improves image quality.

Training on only a single training image per model allows to retain the advantages of a CNN (i.e. translation invariance), while still also learning view dependent textures, unlike generic naive 2D texture enhancement networks.

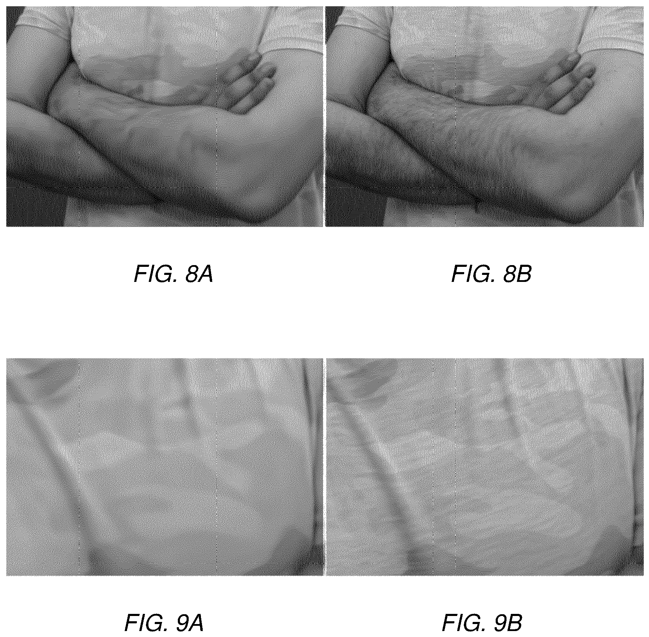

Figures 8A and 9A illustrate qualitative results produced using the state-of-the-art neural rendering method, NeRFies, compared to the present approach in Figures 8B and 9B. The approach described herein can be seen to improve texture and detail in the reconstructed result when compared to the result of a state-of-the-art method.

Quantitatively, the state-of-the-art approach NeRFies yielded 35.56 dB peak signal-to-noise-ratio (PSNR), whereas use of the present approach yielded results of 37.17 dB PSNR. The present approach therefore improves the reconstruction quality of rendered views by a large 1.6 dB when compared to the state-of-the-art neural rendering method.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention as defined by the appended claims.

**Claims**

1. An image processing apparatus (700) for forming an enhanced image (119), the image processing apparatus (700) being configured to:

   • receive (601) input data comprising an input image (108), a corresponding depth map (109) for the input image and a three-dimensional camera pose (103) for the input image, wherein the input image (108) and the corresponding depth map (109) are outputs of an image rendering pipeline (100);

• map (602) the input data to an embedding space to determine a data point for the input data in the embedding space;

• determine (603) a respective distance between the data point for the input data and each of multiple centroids in the embedding space, the multiple centroids each corresponding to a respective trained model;

• in dependence on each respective distance, select (604) multiple trained models;

• apply (605) each model of the determined multiple trained models to the input image to form multiple hypotheses (117) of the enhanced image; and

• in dependence on the multiple hypotheses (117) of the enhanced image, form (606) the enhanced image (119).

2. The image processing apparatus (700) as claimed in claim 1, wherein the input image (108) corresponds to a novel view output from the image rendering pipeline (100).

3. The image processing apparatus (700) as claimed in claim 1 or claim 2, wherein the input data comprises two-dimensional RGB image information and three-dimensional geometric information and wherein the image processing apparatus is configured to map the input data to the embedding space to form the data point.

4. The image processing apparatus (700) as claimed in any preceding claim, wherein the distance is a Euclidean distance.

5. The image processing apparatus (700) as claimed in any preceding claim, wherein each centroid is pre-computed from a respective set of training data (503, 504, 505) used to train the image rendering pipeline, each set of training data comprising a respective training image (503), a corresponding depth map (504) for that training image and a three-dimensional camera pose (505) for that training image.

6. The image processing apparatus (700) as claimed in claim 5, wherein the multiple centroids are pre-computed by mapping each set of training data (503, 504, 505) to the embedding space.

7. The image processing apparatus (700) as claimed in any preceding claim, wherein each centroid has a corresponding trained model.

8. The image processing apparatus (700) as claimed in any preceding claim, wherein each model of the multiple trained models is pre-trained to learn residuals of a corresponding training image (503) used to train the image rendering pipeline.

9. The image processing apparatus (700) as claimed in any preceding claim, wherein the multiple trained models comprise multiple independent convolutional neural networks.

10. The image processing apparatus (700) as claimed in claim 9, wherein each convolutional neural network is a U-Net comprising a set of convolutions of decreasing spatial resolution followed by a set of convolutions of increasing spatial resolution, with residual connections between convolutions of the same resolution.

11. The image processing apparatus (700) as claimed in any preceding claim, wherein the enhanced image (119) and the multiple hypotheses (117) of the enhanced image are each texture-enhanced images relative to the input image (108).

12. The image processing apparatus (700) as claimed in any preceding claim, wherein each centroid corresponds to a different three-dimensional camera pose.

13. The image processing apparatus (700) as claimed in any preceding claim, wherein the image processing apparatus is configured to fuse the multiple hypotheses (117) of the enhanced image to form the enhanced image (119).

14. The image processing apparatus (700) as claimed in claim 13, wherein fusion of the multiple hypotheses (117) of the enhanced image is performed by inputting the multiple hypotheses of the enhanced image to a neural network, wherein the output of the neural network is the enhanced image (119).

15. A method (600) for forming an enhanced image (119) performed by an image processing apparatus (700), the method comprising:

• receiving (601) input data comprising an input image (108), a corresponding depth map (109) for the input image and a three-dimensional camera pose (103) for the input image, wherein the input image (108) and the corresponding depth map (109) are outputs of an image rendering pipeline (100);

• mapping (602) the input data to an embedding space to determine a data point for the input data in the embedding space;

• determining (603) a respective distance between the data point for the input data and each of multiple centroids in the embedding space, the multiple centroids each corresponding to a respective trained model;

• in dependence on each respective distance, selecting (604) multiple trained models;

• applying (605) each model of the determined multiple trained models to the input image to form multiple hypotheses (117) of the enhanced image; and

• in dependence on the multiple hypotheses (117) of the enhanced image, forming (606) the enhanced image (119).

**Patentansprüche**

1. Bildverarbeitungsvorrichtung (700) zum Bilden eines verbesserten Bildes (119), wobei die Bildverarbeitungsvorrichtung (700) zu Folgendem konfiguriert ist:

• Empfangen (601) von Eingabedaten, die ein Eingabebild (108), eine entsprechende Tiefenkarte (109) für das Eingabebild und eine dreidimensionale Kamerapose (103) für das Eingabebild umfassen, wobei das Eingabebild (108) und die entsprechende Tiefenkarte (109) Ausgaben einer Bildwiedergabeleitung (100) sind;

• Abbilden (602) der Eingabedaten auf einen Einbettungsraum, um einen Datenpunkt für die Eingabedaten in dem Einbettungsraum zu bestimmen;

• Bestimmen (603) eines jeweiligen Abstands zwischen dem Datenpunkt für die Eingabedaten und jedem von mehreren Zentroiden in dem Einbettungsraum, wobei die mehreren Zentroide jeweils einem jeweiligen trainierten Modell entsprechen;

• in Abhängigkeit von jedem jeweiligen Abstand, Auswählen (604) mehrerer trainierter Modelle;

• Anwenden (605) jedes Modells der bestimmten mehreren trainierten Modelle auf das Eingabebild, um mehrere Hypothesen (117) des verbesserten Bildes zu bilden; und

• in Abhängigkeit von den mehreren Hypothesen (117) des verbesserten Bildes, Bilden (606) des verbesserten Bildes (119).

2. Bildverarbeitungsvorrichtung (700) nach Anspruch 1, wobei das Eingabebild (108) einer neuen Ansicht entspricht, die aus der Bildwiedergabeleitung (100) ausgegeben wird.

3. Bildverarbeitungsvorrichtung (700) nach Anspruch 1 oder 2, wobei die Eingabedaten zweidimensionale RGB-Bildinformationen und dreidimensionale geometrische Informationen umfassen und wobei die Bildverarbeitungsvorrichtung dazu konfiguriert ist, die Eingabedaten auf dem Einbettungsraum abzubilden, um den Datenpunkt zu bilden.

4. Bildverarbeitungsvorrichtung (700) nach einem der vorhergehenden Ansprüche, wobei es sich bei dem Abstand um einen euklidischen Abstand handelt.

5. Bildverarbeitungsvorrichtung (700) nach einem der vorhergehenden Ansprüche, wobei jedes Zentroid aus einem jeweiligen Satz von Trainingsdaten (503, 504, 505), die zum Trainieren der Bildwiedergabeleitung verwendet werden, vorab berechnet wird, wobei jeder Satz von Trainingsdaten ein jeweiliges Trainingsbild (503), eine entsprechende Tiefenkarte (504) für dieses Trainingsbild und eine dreidimensionale Kamerapose (505) für dieses Trainingsbild umfasst.

6. Bildverarbeitungsvorrichtung (700) nach Anspruch 5, wobei die mehreren Zentroide durch Abbilden jedes Satzes von Trainingsdaten (503, 504, 505) auf den Einbettungsraum vorab berechnet werden.

7. Bildverarbeitungsvorrichtung (700) nach einem der vorhergehenden Ansprüche, wobei jedes Zentroid über ein entsprechendes trainiertes Modell verfügt.

8. Bildverarbeitungsvorrichtung (700) nach einem der vorhergehenden Ansprüche, wobei jedes Modell der mehreren trainierten Modelle vortrainiert ist, um Residuen eines entsprechenden Trainingsbildes (503) zu lernen, das zum Trainieren der Bildwiedergabeleitung verwendet wird.

9. Bildverarbeitungsvorrichtung (700) nach einem der vorhergehenden Ansprüche, wobei die mehreren trainierten Modelle mehrere unabhängige Convolutional Neural Networks umfassen.

10. Bildverarbeitungsvorrichtung (700) nach Anspruch 9, wobei jedes Convolutional Neural Network ein U-Net ist, das einen Satz von Faltungen mit abnehmender räumlicher Auflösung, gefolgt von einem Satz von Faltungen mit zunehmender räumlicher Auflösung, mit Residualverbindungen zwischen Faltungen gleicher Auflösung umfasst.

11. Bildverarbeitungsvorrichtung (700) nach einem der vorhergehenden Ansprüche, wobei das verbesserte Bild (119) und die mehreren Hypothesen (117) des verbesserten Bildes jeweils texturverbesserte Bilder relativ zu dem Eingabebild (108) sind.

12. Bildverarbeitungsvorrichtung (700) nach einem der vorhergehenden Ansprüche, wobei jedes Zentroid einer anderen dreidimensionalen Kamerapose entspricht.

**13.** Bildverarbeitungsvorrichtung (700) nach einem der vorhergehenden Ansprüche, wobei die Bildverarbeitungsvorrichtung dazu konfiguriert ist, die mehreren Hypothesen (117) des verbesserten Bildes zu verschmelzen, um das verbesserte Bild (119) zu bilden.

**14.** Bildverarbeitungsvorrichtung (700) nach Anspruch 13, wobei das Verschmelzen der mehreren Hypothesen (117) des verbesserten Bildes durch Eingeben der mehreren Hypothesen des verbesserten Bildes in ein neuronales Netzwerk durchgeführt wird, wobei die Ausgabe des neuronalen Netzwerks das verbesserte Bild (119) ist.

**15.** Verfahren (600) zum Bilden eines verbesserten Bildes (119), das durch eine Bildverarbeitungsvorrichtung (700) durchgeführt wird, wobei das Verfahren Folgendes umfasst:

• Empfangen (601) von Eingabedaten, die ein Eingabebild (108), eine entsprechende Tiefenkarte (109) für das Eingabebild und eine dreidimensionale Kamerapose (103) für das Eingabebild umfassen, wobei das Eingabebild (108) und die entsprechende Tiefenkarte (109) Ausgaben einer Bildwiedergabeleitung (100) sind;
• Abbilden (602) der Eingabedaten auf einen Einbettungsraum, um einen Datenpunkt für die Eingabedaten in dem Einbettungsraum zu bestimmen;
• Bestimmen (603) eines jeweiligen Abstands zwischen dem Datenpunkt für die Eingabedaten und jedem von mehreren Zentroiden in dem Einbettungsraum, wobei die mehreren Zentroide jeweils einem jeweiligen trainierten Modell entsprechen;
• in Abhängigkeit von jedem jeweiligen Abstand, Auswählen (604) mehrerer trainierter Modelle;
• Anwenden (605) jedes Modells der bestimmten mehreren trainierten Modelle auf das Eingabebild, um mehrere Hypothesen (117) des verbesserten Bildes zu bilden; und
• in Abhängigkeit von den mehreren Hypothesen (117) des verbesserten Bildes, Bilden (606) des verbesserten Bildes (119).

**Revendications**

**1.** Appareil de traitement d'image (700) permettant de former une image améliorée (119), l'appareil de traitement d'image (700) étant configuré pour :

• recevoir (601) des données d'entrée comprenant une image d'entrée (108), une carte de profondeur correspondante (109) pour l'image d'entrée et une pose de caméra tridimensionnelle (103) pour l'image d'entrée, dans lequel l'image d'entrée (108) et la carte de profondeur correspondante (109) sont des sorties d'un pipeline de rendu d'image (100) ;
• cartographier (602) les données d'entrée à un espace d'intégration pour déterminer un point de données pour les données d'entrée dans l'espace d'intégration ;
• déterminer (603) une distance respective entre le point de données pour les données d'entrée et chacun des multiples centroïdes dans l'espace d'intégration, les multiples centroïdes correspondant chacun à un modèle entraîné respectif ;
• en fonction de chaque distance respective, sélectionner (604) de multiples modèles entraînés ;
• appliquer (605) chaque modèle des multiples modèles entraînés déterminés à l'image d'entrée pour former de multiples hypothèses (117) de l'image améliorée ; et
• en fonction des multiples hypothèses (117) de l'image améliorée, former (606) l'image améliorée (119).

**2.** Appareil de traitement d'image (700) selon la revendication 1, dans lequel l'image d'entrée (108) correspond à une nouvelle vue de sortie du pipeline de rendu d'image (100).

**3.** Appareil de traitement d'image (700) selon la revendication 1 ou la revendication 2, dans lequel les données d'entrée comprennent des informations d'image RGB bidimensionnelles et des informations géométriques tridimensionnelles et dans lequel l'appareil de traitement d'image est configuré pour cartographier les données d'entrée sur l'espace d'intégration afin de former le point de données.

**4.** Appareil de traitement d'image (700) selon une quelconque revendication précédente, dans lequel la distance est une distance euclidienne.

**5.** Appareil de traitement d'image (700) selon une quelconque revendication précédente, dans lequel chaque centroïde est pré-calculé à partir d'un ensemble respectif de données d'entraînement (503, 504, 505) utilisées pour entraîner le pipeline de rendu d'image, chaque ensemble de données d'entraînement comprenant une image d'entraînement respective (503), une carte de profondeur correspondante (504) pour cette image d'entraînement et une pose de caméra tridimensionnelle (505) pour cette image d'entraînement.

**6.** Appareil de traitement d'image (700) selon la revendication 5, dans lequel les multiples centroïdes sont précalculés en cartographiant chaque ensemble de données d'entraînement (503, 504, 505) sur l'espace d'intégration.

**7.** Appareil de traitement d'image (700) selon une quelconque revendication précédente, dans lequel chaque centroïde présente un modèle entraîné correspondant.

**8.** Appareil de traitement d'image (700) selon une quelconque revendication précédente, dans lequel chaque modèle des multiples modèles entraînés est pré-entraîné pour apprendre les résidus d'une image d'entraînement correspondante (503) utilisée pour entraîner le pipeline de rendu d'image.

**9.** Appareil de traitement d'image (700) selon une quelconque revendication précédente, dans lequel les multiples modèles entraînés comprennent de multiples réseaux neuronaux convolutifs indépendants.

**10.** Appareil de traitement d'image (700) selon la revendication 9, dans lequel chaque réseau neuronal convolutif est un U-Net comprenant un ensemble de convolutions de résolution spatiale décroissante suivies d'un ensemble de convolutions de résolution spatiale croissante, avec des connexions résiduelles entre les convolutions de même résolution.

**11.** Appareil de traitement d'image (700) selon une quelconque revendication précédente, dans lequel l'image améliorée (119) et les multiples hypothèses (117) de l'image améliorée sont chacune des images à texture améliorée par rapport à l'image d'entrée (108).

**12.** Appareil de traitement d'image (700) selon une quelconque revendication précédente, dans lequel chaque centroïde correspond à une pose de caméra tridimensionnelle différente.

**13.** Appareil de traitement d'image (700) selon une quelconque revendication précédente, dans lequel l'appareil de traitement d'image est configuré pour fusionner les multiples hypothèses (117) de l'image améliorée pour former l'image améliorée (119).

**14.** Appareil de traitement d'image (700) selon la revendication 13, dans lequel la fusion des multiples hypothèses (117) de l'image améliorée est réalisée en introduisant les multiples hypothèses de l'image améliorée dans un réseau neuronal, dans lequel la sortie du réseau neuronal est l'image améliorée (119).

**15.** Procédé (600) de formation d'une image améliorée (119) réalisé par un appareil de traitement d'image (700), le procédé comprenant :

• la réception (601) de données d'entrée comprenant une image d'entrée (108), une carte de profondeur correspondante (109) pour l'image d'entrée et une pose de caméra tridimensionnelle (103) pour l'image d'entrée, dans lequel l'image d'entrée (108) et la carte de profondeur correspondante (109) sont des sorties d'un pipeline de rendu d'image (100) ;
• la cartographie (602) des données d'entrée à un espace d'intégration pour déterminer un point de données pour les données d'entrée dans l'espace d'intégration ;
• la détermination (603) d'une distance respective entre le point de données pour les données d'entrée et chacun des multiples centroïdes dans l'espace d'intégration, les multiples centroïdes correspondant chacun à un modèle entraîné respectif ;
• en fonction de chaque distance respective, la sélection (604) de multiples modèles entraînés ;
• l'application (605) de chaque modèle des multiples modèles entraînés déterminés à l'image d'entrée pour former de multiples hypothèses (117) de l'image améliorée ; et
• en fonction des multiples hypothèses (117) de l'image améliorée, la formation (606) de l'image améliorée (119).

*FIG. 1*

FIG. 2

(1)

200a

(2)

200b

(N)

200c

*FIG. 3*

*FIG. 4*

*FIG. 5*

...

600

601 — Receive input data comprising an input image, a corresponding depth map for the input image and a three-dimensional camera pose for the input image, wherein the input image and the corresponding depth map are outputs of an image rendering pipeline

602 — Map the input data to an embedding space to determine a data point for the input data in the embedding space

603 — Determine a respective distance between the data point for the input data and each of multiple centroids in the embedding space, the multiple centroids each corresponding to a respective trained model

604 — In dependence on each respective distance, select multiple trained models

605 — Apply each model of the determined multiple trained models to the input image to form multiple hypotheses of the enhanced image

606 — In dependence on the multiple hypotheses of the enhanced image, form the enhanced image

*FIG. 6*

*FIG. 7*

FIG. 8A

FIG. 8B

FIG. 9A

FIG. 9B

## REFERENCES CITED IN THE DESCRIPTION

### Patent documents cited in the description

- US 2022014723 A1

### Non-patent literature cited in the description

- **B. MILDENHALL et al.** NeRF: Representing Scenes as Neural Radiance Fields for View Synthesis. *The 2020 European Conference on Computer Vision*, 2020

- **X. RONG et al.** Boosting View Synthesis with Residual Transfer. *The 2022 European Conference on Computer Vision*, 2022
- **PARK et al.** NeRFies: Deformable Neural Radiance Fields. *arXiv:2011.12948v5*, September 2021